# EUROPEAN PATENT SPECIFICATION

(11) **EP 2 639 276 B1**
(45) Date of publication and mention of the grant of the patent: **29.05.2019**
(21) Application number: 11840186.8
(22) Date of filing: 08.11.2011
(51) Int. Cl.: C09J 7/24, C09J 7/38, C09J 11/04, C09J 201/00, B32B 27/00, B32B 27/32, B32B 27/30, B32B 7/06, B32B 7/12, C08K 3/20, C08K 3/00, C08J 5/12, C08J 7/12

(54) **OIL-RESISTANT, HEAT-RESISTANT ADHESIVE SHEET, ADHESION METHOD, AND OIL-RESISTANT, HEAT-RESISTANT ADHESIVE STRUCTURE**
ÖL- UND WÄRMEBESTÄNDIGE KLEBEFOLIE, KLEBEVERFAHREN SOWIE ÖL- UND WÄRMEBESTÄNDIGE KLEBESTRUKTUR
FEUILLE ADHÉSIVE ET STRUCTURE ADHÉSIVE RÉSISTANT À L'HUILE ET À LA CHALEUR ET PROCÉDÉ D'ADHÉRENCE

(30) Priority: 08.11.2010 JP 2010250049; 07.11.2011 JP 2011243243
(43) Date of publication of application: 18.09.2013
(73) Proprietor: Nitto Denko Corporation, Osaka 567-8680 (JP)
(72) Inventor: TAGAWA, Kenichi, Ibaraki-shi Osaka 567-8680 (JP); NAITO, Tomonari, Ibaraki-shi Osaka 567-8680 (JP); ISEKI, Azusa, Ibaraki-shi Osaka 567-8680 (JP); KUBO, Asami, Ibaraki-shi Osaka 567-8680 (JP); TAKAYAMA, Yoshinari, Ibaraki-shi Osaka 567-8680 (JP)
(74) Representative: Grünecker Patent- und Rechtsanwälte PartG mbB
(86) International application number: PCT/JP2011/075696
(87) International publication number: WO 2012/063810

(56) References cited:
- JP-A- 10 087 351
- JP-A- 62 068 870
- JP-A- 2001 164 202
- JP-A- 2003 147 312
- JP-A- 2003 281 969
- JP-A- 2008 291 130
- JP-A- 2009 024 042
- JP-A- 2010 519 348
- DATABASE WPI Week 200918 Thomson Scientific, London, GB; AN 2009-E53380 XP002726937, & JP 2009 024042 A (NITTO DENKO CORP) 5 February 2009 (2009-02-05)
- DATABASE WPI Week 199927 Thomson Scientific, London, GB; AN 1999-323792 XP002726929, & JP H11 116904 A (OJI PAPER CO) 27 April 1999 (1999-04-27)

## Description

### TECHNICAL FIELD

The present invention relates to an oil and heat resistant pressure-sensitive adhesive sheet, a bonding method, and an oil and heat resistant adhesive structure; in particular, the present invention relates to an oil and heat resistant pressure-sensitive adhesive sheet, a bonding method for bonding the sheet, and an oil and heat resistant adhesive structure in which the oil and heat resistant pressure-sensitive adhesive sheet is bonded.

### BACKGROUND ART

Conventionally, a pressure-sensitive adhesive sheet includes a substrate, and a pressure-sensitive adhesive layer laminated on one side thereof, and is used for various industrial products. For example, pressure-sensitive adhesive sheets are used for binding or fixing of automobile wiring and various components of automobiles.

In the above-described use, various oils and oil such as gasoline attach to the pressure-sensitive adhesive sheet, or the pressure-sensitive adhesive sheet is exposed to a mist of various oils. Then, with such presence of oil, the pressure-sensitive adhesive sheet is exposed to a high temperature atmosphere. Therefore, pressure-sensitive adhesive sheets are required to have the oil and heat resistance, i.e., bonding performance (pressure-sensitive adhesive force) is not easily reduced even under the above-described environment.

Patent Document 1 below has proposed, for example, to improve such oil and heat resistance, a pressure-sensitive adhesive plate including a glass plate, and a pressure-sensitive adhesive layer laminated on one side of the glass plate, the pressure-sensitive adhesive layer being composed of an anionic aqueous dispersion of an acrylic block copolymer.

### Citation List

### Patent Document

Patent Document 1: Japanese Unexamined Patent Publication No. 2008-291130

JP-A-2009-024042 discloses an adhesive tape for cable bundling which is less liable to cause end peeling. The adhesive tape comprises a substrate, and an adhesive layer provided on one surface of the substrate.

JP-A-H11-116904 discloses an adhesive sheet comprising a substrate, an adhesive layer, and a release paper. The adhesive layer contains an oil-absorbing pigment.

### SUMMARY OF THE INVENTION

### PROBLEM TO BE SOLVED BY THE INVENTION

However, nowadays, further improvement in oil and heat resistance is required for the pressure-sensitive adhesive sheets used for the above-described application.

An object of the present invention is to provide an oil and heat resistant pressure-sensitive adhesive sheet having excellent pressure-sensitive adhesive properties under a normal temperature environment, having excellent pressure-sensitive adhesive properties under a high temperature environment (hereinafter referred to as heat resistance), and having excellent pressure-sensitive adhesive properties under a high temperature environment where oil is present (hereinafter referred to as oil and heat resistance); a bonding method of bonding the sheet; and an oil and heat resistant adhesive structure in which the oil and heat resistant pressure-sensitive adhesive sheet is bonded.

### MEANS FOR SOLVING THE PROBLEM

The present invention provides:
(1) An oil and heat resistant pressure-sensitive adhesive sheet comprising:
   a substrate containing a fluororesin, and
   a pressure-sensitive adhesive layer laminated on at least one surface of the substrate,
   wherein the one surface of the substrate is subjected to a surface roughening treatment and/or a primer treatment,
   the pressure-sensitive adhesive layer is formed from an aqueous dispersion type oil-resistant pressure-sensitive adhesive composition containing an aqueous dispersion polymer and inorganic particles,
   the average particle size of each of the inorganic particles is 1 to 1000 nm, and
   the aqueous dispersion polymer is an acrylic polymer.
(2) The oil and heat resistant pressure-sensitive adhesive sheet according to item (1), wherein the substrate is formed from a film comprising polytetrafluoroethylene.
(3) The oil and heat resistant pressure-sensitive adhesive sheet according to item (1), wherein at least said one surface of the substrate is subjected to sputter etching and/or wet etching.
(4) The oil and heat resistant pressure-sensitive adhesive sheet according to item (1), wherein the aqueous dispersion polymer has a standard deviation of the volume-based average particle size of 0.001 µm or more and 0.2 µm or less.
(5) A bonding method in which an oil and heat resistant pressure-sensitive adhesive sheet is bonded to an adherend disposed under an environment where oil is present, the oil and heat resistant pressure-sensitive adhesive sheet comprising:
   a substrate containing a fluororesin, and
   a pressure-sensitive adhesive layer laminated on at least one surface of the substrate,
   wherein the one surface of the substrate is subjected to a surface roughening treatment and/or a primer treatment,
   the pressure-sensitive adhesive layer comprises an aqueous dispersion type oil-resistant pressure-sensitive adhesive composition containing an aqueous dispersion polymer and inorganic particles,
   the average particle size of each of the inorganic particles is 1 to 1000 nm, and
   the aqueous dispersion polymer is an acrylic polymer.
(6) An oil and heat resistant adhesive structure in which an oil and heat resistant pressure-sensitive adhesive sheet is bonded to an adherend disposed under an environment where oil is present,
   the oil and heat resistant pressure-sensitive adhesive sheet comprising:
   a substrate containing a fluororesin, and
   a pressure-sensitive adhesive layer laminated on at least one surface of the substrate,
   wherein the one surface of the substrate is subjected to a surface roughening treatment and/or a primer treatment,
   the pressure-sensitive adhesive layer comprises an aqueous dispersion type oil-resistant pressure-sensitive adhesive composition containing an aqueous dispersion polymer and inorganic particles,
   the average particle size of each of the inorganic particles is 1 to 1000 nm, and
   the aqueous dispersion polymer is an acrylic polymer.

### EFFECT OF THE INVENTION

In an oil and heat resistant pressure-sensitive adhesive sheet of the present invention, the aqueous dispersion type oil-resistant pressure-sensitive adhesive composition contains an aqueous dispersion polymer and inorganic particles, and therefore the pressure-sensitive adhesive layer is excellent in pressure-sensitive adhesive properties under a normal temperature environment, heat resistance, and oil and heat resistance.

Furthermore, in an oil and heat resistant pressure-sensitive adhesive sheet of the present invention, the substrate containing a fluororesin is excellent in heat resistance.

Furthermore, at least one of surface of the substrate is subjected to surface roughening treatment and/or a primer treatment, and therefore close adhesion between the substrate and the pressure-sensitive adhesive layer can be improved.

Therefore, an oil and heat resistant pressure-sensitive adhesive sheet having the above-described substrate and pressure-sensitive adhesive layer keeps excellent pressure-sensitive adhesive properties to an adherend under a normal temperature environment, and allows effective prevention of reduction in pressure-sensitive adhesive force to the adherend even if the oil and heat resistant pressure-sensitive adhesive sheet is bonded to an adherend disposed under a high temperature environment where oil is present.

Thus, an oil and heat resistant adhesive structure of the present invention in which the above-described oil and heat resistant pressure-sensitive adhesive sheet is bonded to an adherend can be applied to various industrial products.

### BRIEF DESCRIPTION OF THE DRAWINGS

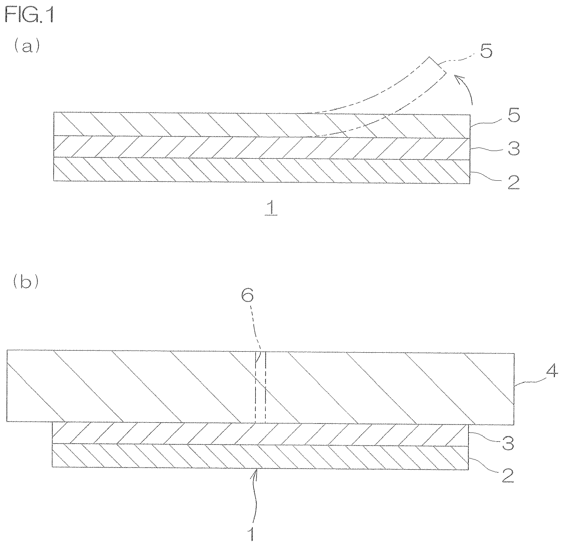

FIG. 1 is a cross-sectional view illustrating an embodiment of a bonding method of the present invention, in which an oil and heat resistant pressure-sensitive adhesive sheet in an embodiment (embodiment in which a pressure-sensitive adhesive layer is laminated on one surface of the substrate) of the present invention is bonded to an adherend,
   (a) illustrating a step of preparing an oil and heat resistant pressure-sensitive adhesive sheet, and
   (b) illustrating a step of bonding the oil and heat resistant pressure-sensitive adhesive sheet to an adherend.

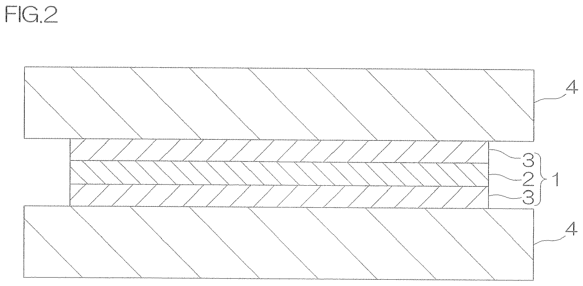

FIG. 2 is a cross-sectional view illustrating another embodiment of a bonding method of the present invention, in which another embodiment (embodiment in which a pressure-sensitive adhesive layer is laminated on one surface and the other surface of a substrate) of the oil and heat resistant pressure-sensitive adhesive sheet of the present invention is bonded to an adherend.

### EMBODIMENT OF THE INVENTION

FIG. 1 is a cross-sectional view illustrating an embodiment of the bonding method of the present invention, in which an oil and heat resistant pressure-sensitive adhesive sheet in an embodiment (embodiment in which a pressure-sensitive adhesive layer is laminated on one surface of a substrate) of the present invention is bonded to an adherend.

In FIG. 1 (a), an oil and heat-resistant pressure-sensitive adhesive sheet 1 of the present invention includes a substrate 2, and a pressure-sensitive adhesive layer 3 laminated on one surface of the substrate 2, the one surface being one side in the thickness direction (hereinafter simply referred to as one surface. Single side.).

The substrate 2 is formed from a heat resistant substrate containing a fluororesin, and examples of such a heat resistant substrate include a film formed from a fluororesin, and a fabric material impregnated with a fluororesin.

Examples of the fluororesin include polytetrafluoroethylene (PTFE), a tetrafluoroethylene-hexafluoropropylene copolymer, a tetrafluoroethylene-perfluoroalkylvinylether copolymer, and an ethylene-tetrafluoroethylene copolymer. Preferably, in view of obtaining excellent heat resistance, PTFE is used.

Examples of the fabric include heat resistant fabric including heat resistant woven or nonwoven fabric formed from, for example, inorganic fiber such as glass fiber, asbestos fiber, alumina fiber, boron fiber, boron nitride fiber, silicon carbide fiber, and titania fiber, and organic fiber such as aromatic polyamide fiber.

The fabric material can be obtained, for example, by the following methods: the above-described fabric is immersed in a dispersion of the above-described fluororesin and then taken out, and then the fabric is heated at a temperature of the melting point of the fluororesin or more, and thereafter, as necessary, the above-described immersion and heating are repeated; a dispersion of the above-described fluororesin is applied to the above-described fabric, and then the fabric is heated at a temperature of the melting point or more of the fluororesin, and as necessary, the immersion and heating are repeated; and the above-described fabric and the above-described fluororesin film are piled up, and then heated at the melting point of the fluororesin or more. With the above-described method, the fabric is impregnated with the fluororesin, and at the same time, a fluororesin thin layer formed from the fluororesin is formed on the surfaces of the fabric (both surfaces: one surface and the other surface).

Of the above-described heat resistant substrates, preferably, a film formed from a fluororesin is used.

The surface of the substrate 2 (one surface and the other surface) has a surface roughness Rz (10-point average surface roughness in conformity with JIS B 0601-1994. The same applies to the following) of, for example, 0.01 to 1 µm.

Then, one surface of the substrate 2 is subjected to a surface treatment being a surface roughening treatment and/or a primer treatment.

The surface roughening treatment improves close adhesion between the substrate 2 and the pressure-sensitive adhesive layer 3 by roughening one surface of the substrate 2 and causing anchor effects of the pressure-sensitive adhesive layer 3 on the substrate 2, when a fluororesin having a low coefficient of friction is present on one surface of the substrate 2.

Examples of the surface roughening treatment include dry treatment and wet treatment.

Examples of the dry treatment include, for example, dry etching such as sputter etching, plasma etching, and reactive ion etching, and blasting such as sand-blasting.

Examples of the wet treatment include, for example, wet etching using an etching solution.

For the surface roughening treatment, preferably, sputter etching, or wet etching is used.

In the sputter etching method, energy particles derived from gas are allowed to collide against one surface of the substrate 2 to release molecules or atoms present on one surface of the substrate 2. To be specific, first, the substrate 2 is placed in a chamber so that the other surface of the substrate 2 is protected, and then while introducing inert gas in the sealed chamber, the pressure in the chamber is reduced, followed by application of a high-frequency voltage in the chamber, thereby etching one surface of the substrate 2.

Examples of the inert gas include rare gases such as helium, neon, argon, and krypton; and nitrogen.

The frequency of the high-frequency voltage is, for example, 1 to 100MHz, preferably 5 to 50MHz.

The pressure in the chamber is, for example, 0.05 to 200 Pa, preferably 1 to 100 Pa, and the energy (product of processing time and electric power) in the sputter etching is, for example, 1 to 1000J/cm², preferably 2 to 200J/cm².

Surface roughness Rz of one surface of the substrate 2 to which the surface roughening treatment was given is, for example, 1 to 20 µm, preferably 2 to 10 µm.

In the wet etching method, fluorine atoms present on one surface of the substrate 2 are abstracted so that one surface of the substrate 2 is in an electron deficient state. By drying the substrate 2 after wet etching, functional groups such as a hydroxyl group, a carbonyl group, and a carboxyl group are exposed on one surface of the substrate 2, and in this manner, close adhesion between the substrate 2 and the pressure-sensitive adhesive layer 3 is improved.

In the primer treatment, a primer layer (not shown) is formed on one surface of the substrate 2, and by the primer layer interposed between the substrate 2 and the pressure-sensitive adhesive layer 3, close adhesion therebetween is improved.

Examples of the primer for forming the primer layer include known primers such as an acrylic primer and an epoxy primer.

In the primer treatment, the above-described primer is applied on one surface of the substrate 2, and as necessary, dried by heating, thereby forming a primer layer. The primer layer has a thickness of, for example, 0.1 to 10 µm.

The above-described surface treatment can be conducted singly, or can be conducted in a combination. Preferably, in view of reducing costs, a surface roughening treatment is conducted singly.

A commercially available product can be used for the substrate 2, and for example, NITOFLON® film No.901W-UL (one surface/sputter etching-treated, manufactured by Nitto Denko Corporation), or NITOFLON® film No.901UL (one surface/wet etching-treated, manufactured by Nitto Denko Corporation) is used.

The thickness of the substrate 2 can be suitably selected based on its use and purpose, and for example, is 10 to 500 µm, preferably 20 to 200 µm. When one surface of the substrate 2 is treated with a primer, the thickness of the substrate 2 includes the thickness of the primer layer.

The pressure-sensitive adhesive layer 3 is formed from an aqueous dispersion type oil-resistant pressure-sensitive adhesive composition containing an aqueous dispersion polymer and inorganic particles. The aqueous dispersion polymer is an acrylic polymer.

The acrylic polymer can be obtained by polymerizing a monomer component which contains, as the primary component, an alkyl (meth)acrylate.

The alkyl (meth)acrylate is an alkyl methacrylate and/or an alkyl acrylate, and is, for example, represented by the following general formula (1).

CH₂ = C(R¹)COOR² (1)

(where, in general formula (1), R¹ represents a hydrogen atom or a methyl group and R² represents an alkyl group having 2 to 14 carbon atoms.)

Examples of the alkyl group represented by R² include a straight chain or branched chain alkyl group having 2 to 14 carbon atoms such as an ethyl group, a propyl group, an isopropyl group, a butyl group, an isobutyl group, a sec-butyl group, a t-butyl group, a pentyl group, a neopentyl group, an isopentyl group, a hexyl group, a heptyl group, an octyl group, a 2-ethylhexyl group, an isooctyl group, a nonyl group, an isononyl group, a decyl group, an isodecyl group, an undecyl group, a dodecyl group, a tridecyl group, and a tetradecyl group.

The alkyl group represented by R² preferably has 3 to 6 carbon atoms.

To be specific, examples of alkyl (meth)acrylate include alkyl (meth)acrylate having an alkyl moiety of straight chain or branched alkyl with 2 to 14 carbon atoms such as ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, and tetradecyl (meth)acrylate.

These alkyl (meth)acrylates can be used singly or in a combination of two or more.

Preferably, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isopentyl (meth)acrylate, or hexyl (meth)acrylate is used, and more preferably, butyl (meth)acrylate is used.

The mixing ratio of the alkyl (meth)acrylate with respect to the total amount of the monomer component is, for example, 80 mass% or more (to be specific, 80 to 99.8 mass%), preferably 85 mass% or more (to be specific, 85 to 99.5 mass%), or more preferably 90 mass% or more (to be specific, 90 to 99 mass%).

A reactive functional group-containing vinyl monomer can be contained in the monomer component.

The reactive functional group-containing vinyl monomer is a thermal cross-linking functional group-containing vinyl monomer for introducing a cross-linking point that is used for thermal cross-linking to the inorganic particles. By allowing the monomer component to contain the reactive functional group-containing vinyl monomer, bonding performance (pressure-sensitive adhesive force) to an adherend can be improved.

Examples of the reactive functional group-containing vinyl monomer include a carboxyl group-containing vinyl monomer such as an acrylic acid, a methacrylic acid, an itaconic acid, a maleic acid, a crotonic acid, and a maleic unhydride or an acid anhydride thereof; a hydroxyl group-containing vinyl monomer such as 2-hydroxyethyl (meth)acrylate, 2-hydroxypropyl (meth)acrylate, and 2-hydroxybutyl (meth)acrylate; an amide group-containing vinyl monomer such as (meth)acrylamide, N,N-dimethyl (meth)acrylamide, N-methylol (meth)acrylamide, N-methoxymethyl (meth)acrylamide, and N-butoxymethyl (meth)acrylamide; an amino group-containing vinyl monomer such as dimethylaminoethyl (meth)acrylate and t-butylaminoethyl (meth)acrylate; a glycidyl group-containing vinyl monomer such as glycidyl (meth)acrylate; and a nitrogen atom-containing vinyl monomer such as (meth)acrylonitrile, N-(meth)acryloylmorpholine, N-vinyl-2-pyrrolidone, and diacetone acrylamide.

These reactive functional group-containing vinyl monomers can be used alone or in combination. Preferably, a carboxyl group-containing vinyl monomer or an acid anhydride thereof is used.

The mixing ratio of the reactive functional group-containing vinyl monomer is, relative to the total amount of the monomer component, for example, 0.2 to 20 mass%, preferably 0.5 to 15 mass%, more preferably 1 to 10 mass%.

In order to polymerize the above-described monomer component, for example, a known polymerization method such as emulsion polymerization is used.

In the emulsion polymerization, for example, an emulsifier, a polymerization initiator, a chain transfer agent, or the like are appropriately blended with the above-described monomer component in water to be polymerized. To be more specific, a known emulsion polymerization method such as a collective charging method (a collective polymerization method), a monomer dropping method, a monomer emulsion dropping method, or a combination of those methods can be used. In the monomer dropping method and the monomer emulsion dropping method, continuous dropping or divisional dropping is appropriately selected. The reaction conditions and the like are appropriately selected in accordance with the type of the polymerization initiator or the like and the polymerization temperature is, for example, 20 to 100°C.

The emulsifier is not particularly limited and a known emulsifier which is usually used in the emulsion polymerization is used. Examples thereof include an anionic emulsifier such as sodium lauryl sulfate, ammonium lauryl sulfate, sodium dodecylbenzenesulfonate, sodium polyoxyalkylene alkyl sulfate (to be specific, sodium polyoxyethylene lauryl sulfate), sodium polyoxyethylene alkyl ether sulfate, ammonium polyoxyethylene alkyl phenyl ether sulfate, sodium polyoxyethylene alkyl phenyl ether sulfate, and sodium polyoxyethylene alkyl sulfosuccinate and a nonionic emulsifier such as polyoxyethylene alkyl ether, polyoxyethylene alkyl phenyl ether, polyoxyethylene fatty acid ester, and a polyoxyethylene polyoxypropylene block polymer.

These emulsifiers can be used alone or in combination of two or more. Preferably, an anionic emulsifier is used.

The mixing ratio of the emulsifier with respect to 100 parts by mass of the monomer component is, for example, 0.2 to 10 parts by mass, preferably 0.5 to 5 parts by mass.

The polymerization initiator is not particularly limited and a polymerization initiator which is usually used in the emulsion polymerization is used. Examples thereof include an azo-based initiator such as 2,2'-azobisisobutyronitrile, 2,2'-azobis(2-methylpropioneamidine) disulfate, 2,2'-azobis(2-methylpropioneamidine) dihydrochloride, 2,2'-azobis(2-amidinopropane) dihydrochloride, 2,2'-azobis[N-(2-carboxyethyl)-2-methylpropioneamidine] hydrate, 2,2'-azobis(N,N'-dimethyleneisobutylamidine), 2,2'-azobis(N,N'-dimethyleneisobutylamidine) dihydrochloride, and 2,2'-azobis[2-(2-imidazoline-2-yl)propane] dihydrochloride; a persulfate-based initiator such as potassium persulfate and ammonium persulfate; a peroxide-based initiator such as benzoyl peroxide, t-butyl hydroperoxide, and hydrogen peroxide; a substituted ethane-based initiator such as phenyl-substituted ethane; a carbonyl-based initiator such as an aromatic carbonyl compound; and a redox-based initiator (a combination of peroxide and a reducing agent) such as a combination of persulfate and sodium hydrogen sulfite and a combination of peroxide and sodium ascorbate.

The polymerization initiator may be either water-soluble or oil-soluble. These polymerization initiators can be used alone or in combination of two or more. Preferably, an azo-based initiator is used.

The mixing ratio of the polymerization initiator with respect to 100 parts by mass of the monomer component is, for example, 0.005 to 1 parts by mass.

The dissolved oxygen concentration in the monomer component can be reduced by replacing the atmosphere with nitrogen before or during the blending of the polymerization initiator with the above-described monomer component.

The chain transfer agent adjusts a molecular weight of the acrylic polymer and is blended as required. A chain transfer agent which is usually used in the emulsion polymerization is used. An example thereof includes mercaptan such as 1-dodecanethiol, mercaptoacetic acid, 2-mercaptoethanol, 2-ethyl hexyl thioglycolate, and 2,3-dimethylcapto-1-propanol.

These chain transfer agents can be used alone or in combination of two or more.

The mixing ratio of the chain transfer agent with respect to 100 parts by mass of the monomer component is, for example, 0.001 to 0.5 parts by mass.

By the emulsion polymerization, the aqueous dispersion polymer is prepared as an aqueous dispersion, to be specific, an aqueous dispersion (an emulsion) in which an acrylic polymer (water-dispersible particles) is dispersed (emulsified) in water.

The aqueous dispersion polymer can be also prepared as an aqueous dispersion by, for example, polymerizing the above-described monomer component by a method other than the emulsion polymerization (for example, suspension polymerization or the like) without using an organic solvent, and then the above-described emulsification as required.

The average particle size of each of the water-dispersible particles in the aqueous dispersion polymer based on volume is, for example, 0.05 to 10 µm, preferably 0.05 to 1 µm, or more preferably 0.05 to 0.25 µm. The average particle size of each of the water-dispersible particles in the aqueous dispersion polymer based on volume is, for example, 0.2 µm or less, preferably 0.15 µm or less, or more preferably 0.13 µm or less, and is, for example, 0.06 µm or more, preferably 0.07 µm or more, or more preferably 0.08 µm or more.

The standard deviation of the average particle size of each of the water-dispersible particles in the aqueous dispersion polymer based on volume is, for example, 0.001 µm or more and 0.2 µm or less, preferably 0.005 µm or more and 0.15 µm or less, or more preferably 0.005 µm or more and 0.1 µm or less.

When the standard deviation of the average particle size based on volume is within the above-described upper limit, a reduction of the pressure-sensitive adhesive force can be effectively suppressed even in the adhesion under a high humidity atmosphere and/or a high temperature and high humidity atmosphere. The reason thereof is assumed that at the time of drying of the aqueous dispersion type oil-resistant pressure-sensitive adhesive composition, in filling spaces between the inorganic particles with the water-dispersible particles (in allowing the water-dispersible particles to stay in spaces between the inorganic particles) in the pressure-sensitive adhesive layer, a generation of a large defect is suppressed, so that a film (the pressure-sensitive adhesive layer) becomes further uniform.

The average particle size of the water-dispersible particles in the aqueous dispersion polymer based on volume and the standard deviation thereof are measured as the arithmetic average particle size and the arithmetic standard deviation, respectively, by, for example, a laser diffraction scattering particle size analyzer and a calculation software provided therewith.

The solid content concentration of an aqueous dispersion of the aqueous dispersion polymer is, for example, 10 to 80 mass%, or preferably 20 to 65 mass%.

Examples of the inorganic particles include oxide particles such as silica (silicon oxide) particles, titanium oxide particles, tin oxide particles (including antimony doped tin oxide (ATO) particles), alumina (aluminum oxide) particles, and zinc oxide particles; nitride particles such as silicon nitride particles; carbonate particles such as calcium carbonate particles; hydroxide particles such as magnesium hydroxide particles; composite oxide particles (excluding the above-described oxide particles) such as barium titanate particles; and metal particles such as gold particles, silver particles, and copper particles.

The inorganic particles can be used either in the form of powders or in the form of an aqueous dispersion. Preferably, the inorganic particles in the form of an aqueous dispersion are used. The inorganic particles in the form of an aqueous dispersion have the hydrophilic properties, so that by being blended with the aqueous dispersion polymer, the hydrophilic properties of the aqueous dispersion type oil-resistant pressure-sensitive adhesive composition are improved. Therefore, it is assumed that the aqueous dispersion type oil-resistant pressure-sensitive adhesive composition does not easily absorb oil and furthermore, the strength thereof is increased, so that the swelling of the aqueous dispersion type oil-resistant pressure-sensitive adhesive composition due to the absorption of oil can be suppressed.

A commercially available product can be used as the inorganic particles. As the silica particles, examples of the commercially available product include the Snowtex series (for example, Snowtex-XL, Snowtex-YL, Snowtex-ZL, Snowtex PST-2, Snowtex 20, Snowtex 30, Snowtex C, Snowtex O, and Snowtex 50, all of the above are in the form of an aqueous dispersion, manufactured by NISSAN CHEMICAL INDUSTRIES, LTD.); the ADELITE series (for example, ADELITE AT-40 and ADELITE AT-50, all of the above are in the form of an aqueous dispersion, manufactured by ADEKA CORPORATION); and the AEROSIL series (for example, AEROSIL R7200, in the form of powders, manufactured by Nippon Aerosil Co., Ltd.). As the ATO particles, an example thereof includes the SN-100 series (for example, SN-100S (in the form of powders), SN-100P (in the form of powders), and SN-100D (in the form of an aqueous dispersion), all of the above are manufactured by ISHIHARA SANGYO KAISHA, LTD.). As the titanium oxide particles, an example thereof includes the TTO series (in the form of powders, manufactured by ISHIHARA SANGYO KAISHA, LTD.). As the zinc oxide particles, an example thereof includes the SnO series (for example, SnO-310, SnO-350, and SnO-410, all of the above are in the form of powders, manufactured by SUMITOMO OSAKA CEMENT Co., Ltd.).

The shape of each of the inorganic particles is not particularly limited and examples of the shape thereof may include a sphere shape, a needle shape, and a plate shape. The inorganic particles include both primary particles in which the particles are not aggregated with each other and are uniformly dispersed and secondary particles in which the particles are aggregated (secondary aggregation) with each other.

The inorganic particles can be subjected to a known surface treatment.

Of the above-described inorganic particles, preferably, oxide particles, more preferably, silica particles are used. When silica particles are used, the silanol group (Si-OH) on the surface of the silica particles reacts with the functional group (to be specific, carboxyl group) of the reactive functional group-containing monomer, and with an external cross-linking agent (carboxyl group thereof)(described later) blended as necessary, oil and heat resistance of the aqueous dispersion type oil-resistant pressure-sensitive adhesive composition can be improved.

The silica particles in the form of an aqueous dispersion can be prepared by, for example, a sol-gel method. To be specific, the silica particles in the form of an aqueous dispersion can be prepared in conformity with the description in Japanese Unexamined Patent Publication No. S53-112732 and the descriptions in Japanese Patent Publications No. S57-9051, and No. S57-51653.

The silica particles in the form of an aqueous dispersion prepared in this way are prepared as an aqueous dispersion, to be specific, a microparticle colloid solution of silicic anhydride.

To be specific, the above-described silica particles in the form of an aqueous dispersion contains, as the primary component, silicon dioxide and contains, as an accessory component, an aluminum compound such as alumina and sodium aluminate at an appropriate proportion.

Also, a stabilizer can be contained in the above-described aqueous dispersion of the silica particles at an appropriate proportion. Examples of the stabilizer include an inorganic base such as sodium hydroxide, potassium hydroxide, lithium hydroxide, and ammonia; and an organic base such as tetramethyl ammonium.

The average particles size (the average of the maximum length) of each of the inorganic particles is 1 to 1000 nm. Since the average particle size of each of the inorganic particles is within the above-described range, the oil-resistant properties and the heat resistance of the aqueous dispersion type oil-resistant pressure-sensitive adhesive composition are further improved.

The average particle size of each of the inorganic particles in the form of powders is preferably 1 to 500 nm, or more preferably 1 to 200 nm. The average particle size of each of the inorganic particles in the form of an aqueous dispersion is preferably 1 to 200 nm.

The average particle size is a volume average particle size measured with a dynamic light scattering particle size distribution analyzer (for example, SUBMICRON PARTICLE SIZE ANALYZER N5, manufactured by Beckman Coulter, Inc.).

To prepare the aqueous dispersion type oil-resistant pressure-sensitive adhesive composition, the above-described aqueous dispersion of aqueous dispersion polymer and inorganic particles are blended.

To be specific, the inorganic particles are blended in the aqueous dispersion of the aqueous dispersion polymer to be stirred and mixed.

The mixing ratio of the inorganic particles relative to 100 parts by mass of the aqueous dispersion polymer (that is, solid content of the aqueous dispersion) is, for example, 90 parts by mass or less, preferably, 80 parts by mass or less, more preferably 70 parts by mass or less, and for example, 3 parts by mass or more, preferably 5 parts by mass or more.

When the mixing ratio of the inorganic particles is more than the above-described upper limit, the aqueous dispersion type oil-resistant pressure-sensitive adhesive composition becomes excessively hard, and pressure-sensitive adhesive properties (adhesive properties) may not be brought out. On the other hand, when the mixing ratio of the inorganic particles is below the above-described lower limit, reduction in pressure-sensitive adhesive force under a high temperature environment and reduction in pressure-sensitive adhesive force under a high temperature environment where oil is present may not be prevented.

The aqueous dispersion type oil-resistant pressure-sensitive adhesive composition is obtained in this manner.

Preferably, the aqueous dispersion type oil-resistant pressure-sensitive adhesive composition is further blended with an external cross-linking agent. It is assumed that by blending the external cross-linking agent, based on a reason that the aqueous dispersion polymer and the inorganic particles are crosslinked (external crosslinking, or post cross linking), oil and heat resistance of the aqueous dispersion type oil-resistant pressure-sensitive adhesive composition can be further improved.

An external cross-linking agent is not particularly limited and an example thereof includes an oil-soluble or water-soluble external cross-linking agent which is usually used in the external cross-linking.

The external cross-linking agent is, in a case where the monomer component contains a reactive functional group-containing vinyl monomer, a cross-linking agent which is preferably blended and is capable of reacting with a reactive functional group (to be specific, a carboxyl group (-COOH)). Examples of the external cross-linking agent include an epoxy cross-linking agent, an oxazoline cross-linking agent, a carbodiimide cross-linking agent, a hydrazine cross-linking agent, an aziridine cross-linking agent, an isocyanate cross-linking agent, and a metal chelate cross-linking agent.

Examples of the epoxy cross-linking agent include an isocyanurate skeleton-containing heterocyclic epoxy resin (to be specific, the TEPIC series such as TEPIC-G, TEPIC-P, TEPIC-S, and TEPIC-SP (manufactured by NISSAN CHEMICAL INDUSTRIES, LTD.) and the like) such as 1,3,5-tris(2,3-epoxypropyl)-1,3,5-triazine-2,4,6(1H, 3H, 5H)-trione (also known as triglycidyl isocyanurate); a nitrogen atom-containing heterocyclic epoxy resin (to be specific, the TETRAD series (manufactured by MITSUBISHI GAS CHEMICAL COMPANY, INC.) and the like) such as N,N, N',N'-tetraglycidyl-m-xylenediamine and 1,3-bis(N,N-diglycidylaminomethyl)cyclohexane; and mono-ol or polyol polyglycidyl ether (to be specific, the Denacol series (manufactured by Nagase ChemteX Corporation) and the like) such as sorbitol polyglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, 1,6-hexanediol diglycidyl ether, ethylene glycol diglycidyl ether, diethylene glycol diglycidyl ether, polyethylene glycol diglycidyl ether, propylene glycol diglycidyl ether, and polypropylene glycol diglycidyl ether.

The oxazoline cross-linking agent is, for example, an oxazoline group-containing polymer having a main chain consisting of an acrylic skeleton or a styrene skeleton and having an oxazoline group in its side chain of the main chain. Preferably, an oxazoline group-containing acrylic polymer having a main chain consisting of an acrylic skeleton and having an oxazoline group in its side chain of the main chain is used.

Examples of the oxazoline group include a 2-oxazoline group, a 3-oxazoline group, and a 4-oxazoline group. Preferably, a 2-oxazoline group is used.

The 2-oxazoline group is represented by the following general formula (2). 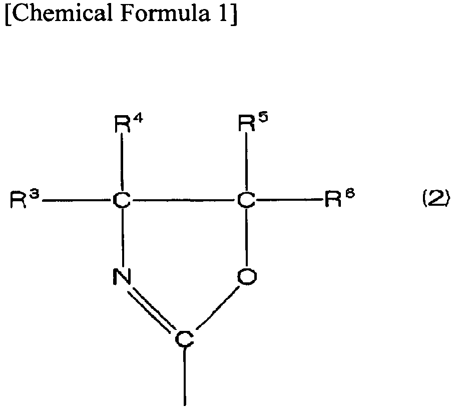 (where, in general formula (2), R³, R⁴, R⁵, and R⁶ each independently represents a hydrogen atom, a halogen atom, an alkyl group, an aralkyl group, a phenyl group, or a substituted phenyl group.)

The oxazoline value of the oxazoline cross-linking agent is, for example, 1500 g solid/eq. or less, or preferably 1200 g solid/eq. or less.

A commercially available product is used as the oxazoline cross-linking agent. To be specific, an example thereof includes the EPOCROS series (manufactured by NIPPON SHOKUBAI CO., LTD.) such as the EPOCROS WS series (an aqueous solution type) including EPOCROS WS-500 and EPOCROS WS-700; and the EPOCROS K series (an aqueous dispersion type) including EPOCROS K-1000 and EPOCROS K-2000.

The carbodiimide cross-linking agent is a compound having a carbodiimide group. The carbodiimide group is a functional group (-N=C=NH) in which one hydrogen atom is abstracted from carbodiimide (HN=C=NH) or a functional group (-N=C=N-) in which two hydrogen atoms are abstracted therefrom. The carbodiimide group is capable of reacting with a carboxyl group.

To be more specific, examples of the carbodiimide cross-linking agent include a low molecular weight compound or a high molecular weight compound each having two or more carbodiimide groups.

The low molecular weight compound having carbodiimide groups is, for example, represented by the following general formula (3).

R⁷-N = C = N-R⁸-N = C = N-R⁹ (3)

(where, in general formula (3), R⁷, R⁸, and R⁹ are different from each other and each represents a hydrocarbon group.)

The high molecular weight compound having carbodiimide groups is polycarbodiimide. Preferably, a high molecular weight compound having a portion which has excellent affinity with water, to be specific, having an ethyleneoxide (-CH₂-CH₂-O-) portion is used.

A commercially available product is used as the high molecular weight compound having carbodiimide groups. To be specific, an example thereof includes the CARBODILITE series (manufactured by NISSHINBO INDUSTRIES, INC.) such as the CARBODILITE V series (an aqueous solution type) including CARBODILITE V-02, CARBODILITE V-02-L2, and CARBODILITE V-04 and the CARBODILITE E series (an aqueous dispersion type) including CARBODILITE E-01, CARBODILITE E-02, and CARBODILITE E-04.

The hydrazine cross-linking agent is a hydrazino group-containing compound having a hydrazino group (H²N-NH-). To be specific, examples thereof include polyhydrazide polycarboxylic acid such as dihydrazide oxalic acid, dihydrazide malonic acid, dihydrazide glutaric acid, dihydrazide succinic acid, dihydrazide adipic acid, dihydrazide azelaic acid, dihydrazide sebacic acid, dihydrazide dodecanedioic acid, dihydrazide maleic acid, dihydrazide fumaric acid, dihydrazide diglycolic acid, dihydrazide tartaric acid, dihydrazide malic acid, dihydrazide isophthalic acid, dihydrazide terephthalic acid; trihydrazide citric acid, and 7,11-ocatadecadiene-1,18-dicarbohydrazide and hydantoins such as 1,3-bis(hydrazinocarbonoethyl)-5-isopropylhydantoin.

For the hydrazine cross-linking agent, a commercially available product is used. To be specific, Ajicure series (manufactured by Ajinomoto Fine-Techno Co., Inc.) such as Ajicure VDH (7,11-octadecadiene-1,18-dicarbohydrazide), Ajicure UDH (1,3-bis(hydrazinocarbonoethyl)-5-isopropylhydantoin) is/are used.

The aziridine cross-linking agent is an aziridine ring-containing compound having an aziridine ring. Examples thereof include 2,2'-bishydroxymethylbutanol-tris[3-(1-aziridinyl propionate] and 4,4'-bis(ethylenediaminocarbonylamino)diphenylmethane.

A commercially available product is used as the aziridine cross-linking agent. An example thereof includes the CHEMITITE series (manufactured by NIPPON SHOKUBAI CO., LTD.) such as CHEMITITE PZ-33 and CHEMITITE DZ-22E.

The isocyanate cross-linking agent is an isocyanate group-containing cross-linking agent having an isocyanate group. An example thereof includes block isocyanate (to be specific, the ELASTRON BN series (manufactured by DAI-ICHI KOGYO SEIYAKU CO., LTD.)).

An example of the metal chelate cross-linking agent includes a chelate compound (to be specific, the Orgatics series (manufactured by Matsumoto Fine Chemical Co., Ltd.) such as zirconium chelate, titanium chelate, and aluminum chelate.

These external cross-linking agents can be used alone or in combination of two or more.

For the external cross-linking agent, preferably, an epoxy cross-linking agent is used.

The mixing ratio of the external cross-linking agent with respect to 100 parts by mass of the aqueous dispersion polymer is, for example, 0.001 to 10 parts by mass, preferably 0.01 to 5 parts by mass, or more preferably 0.01 to 2 parts by mass. When the mixing proportion of the external cross-linking agent is below the above-described range, there may be a case where the degree of cross-linking is reduced and the oil-resistant properties and the heat resistance cannot be sufficiently improved.

The external cross-linking agent is blended in the aqueous dispersion of the aqueous dispersion polymer at, for example, room temperature and by the blending thereof or by the subsequent heating and drying (described later), the cross-linking reaction is performed.

Also, the external cross-linking agent can be blended in the aqueous dispersion polymer at the same time with or after the blending of the inorganic particles.

To the aqueous dispersion type oil-resistant pressure-sensitive adhesive composition, as necessary, additives such as a pH modifier, and furthermore a tackifier, a release modifier, a plasticizer, a softener, an oxidation inhibitor, and a surfactant can be added in a suitable proportion. The additive is added after the preparation of the aqueous dispersion polymer and the inorganic particles or after the blending thereof.

Examples of the pH modifier include a base such as aqueous ammonia; and an acid. Preferably, a base is used. The pH modifier is added to the aqueous dispersion of aqueous dispersion polymer to adjust pH to, for example, 7 to 9, preferably 7 to 8.

Next, description is given below of an example of a method for producing an oil and heat resistant pressure-sensitive adhesive sheet with reference to FIG. 1.

In this method, as shown in FIG. 1 (a), the above-described substrate 2 is prepared. One surface of the substrate 2 is subjected to a surface treatment.

Next, the above-described aqueous dispersion type oil-resistant pressure-sensitive adhesive composition is applied to the one surface of the substrate 2.

In order to apply the aqueous dispersion type oil-resistant pressure-sensitive adhesive composition to the one surface of the substrate 2, for example, a coater such as a gravure coater, a reverse roll coater, a kiss roll coater, a dip roll coater, a bar coater, a knife coater, and a spray coater is used.

Thereafter, the aqueous dispersion type oil-resistant pressure-sensitive adhesive composition is heated and dried. The heating temperature is, for example, 40 to 150°C, or preferably 60 to 125°C and a heating duration is, for example, 1 to 10 minutes, or preferably 2 to 5 minutes.

In this manner, the pressure-sensitive adhesive layer 3 prepared from the aqueous dispersion type oil-resistant pressure-sensitive adhesive composition is laminated on one surface of the substrate 2. When one surface of the substrate 2 is subjected to a primer treatment, the pressure-sensitive adhesive layer 3 is laminated on one surface (of the surfaces of the primer layer, the surface opposite to the surface facing the substrate 2 (the other surface)) of the primer layer (not shown) laminated on one surface of the substrate 2.

The pressure-sensitive adhesive layer 3 has a thickness of, for example, 1 to 1000 µm, preferably 5 to 500 µm.

The oil and heat-resistant pressure-sensitive adhesive sheet 1 including the substrate 2 and the pressure-sensitive adhesive layer 3 laminated on one surface of the substrate 2 can be obtained in this manner.

As necessary, a known release sheet 5 can be laminated on one surface (of the surfaces of the pressure-sensitive adhesive layer 3, the surface opposite to the surface facing the substrate 2 (the other surface)) of the pressure-sensitive adhesive layer 3.

The oil and heat-resistant pressure-sensitive adhesive sheet 1 can also be produced by applying and drying the aqueous dispersion type oil-resistant pressure-sensitive adhesive composition on one surface of the release sheet 5 to form the pressure-sensitive adhesive layer 3, and thereafter, by transferring the pressure-sensitive adhesive layer 3 on one surface of the substrate 2.

Then, because the aqueous dispersion type oil-resistant pressure-sensitive adhesive composition that forms the pressure-sensitive adhesive layer 3 contains an aqueous dispersion polymer and inorganic particles in the above-described oil and heat-resistant pressure-sensitive adhesive sheet 1, the pressure-sensitive adhesive layer 3 is excellent in pressure-sensitive adhesive properties under a normal temperature environment, heat resistance, and oil and heat resistance.

In the above-described oil and heat-resistant pressure-sensitive adhesive sheet 1, the substrate 2 containing a fluororesin is excellent in heat resistance.

Furthermore, because one surface of the substrate 2 is subjected to a surface roughening treatment and/or primer treatment, close adhesion between the substrate 2 and the pressure-sensitive adhesive layer 3 can be improved.

Thus, the oil and heat-resistant pressure-sensitive adhesive sheet 1 including the above-described substrate 2 and the pressure-sensitive adhesive layer 3 can keep excellent pressure-sensitive adhesive properties to the adherend 4 under a normal temperature environment, and effectively prevent reduction in pressure-sensitive adhesive force to the adherend 4 even if bonded to the adherend 4 disposed under a high temperature environment where oil is present.

To bond the oil and heat-resistant pressure-sensitive adhesive sheet 1 to the adherend 4, as shown by the phantom line in FIG. 1 (a), first, a release sheet 5 is removed from the pressure-sensitive adhesive layer 3, and subsequently, as shown in FIG. 1 (b), the pressure-sensitive adhesive layer 3 is bonded to the adherend 4. Thereafter, as necessary, the oil and heat-resistant pressure-sensitive adhesive sheet 1 is pressure-bonded to the adherend 4.

A high temperature environment means, for example, an atmosphere of 60°C or more (to be specific, 60 to 200°C), or more preferably 100°C or more (to be specific, 100 to 200°C).

A high temperature environment where oil is present means, for example, a state of constant immersion in oil under the above-described temperature atmosphere, or a state of intermittent exposure to oil, a state where oil is once attached and not removed. Furthermore, the high temperature environment where oil is present also means, a state of being filled with oil mist by heating or the like in an open space or a state of being filled with oil mist in a pressurized state by heating or the like in a sealed space.

To be specific, the state can be defined as a state of being completely immersed in oil or a state of being filled with oil mist under the above-described high temperature (to be more specific, about 130°C) environment.

Examples of the adherend 4 disposed under the above-described environment include a cooking place (a kitchen and the like) in which a cooking oil or the like is possibly dispersed or is possibly allowed to adhere and a building around the cooking place (an inner wall, an outer wall, and the like), and a material used inside or around the building (various devices or various components, or other various appliances); a building (an inner wall, an outer wall, and the like) in a place (a production factory or a repair shop for automobiles, automobile components, or the like) in which an oil for lubrication, cooling, or hydraulic pressure is dispersed, and a material used inside or around the building (various devices or various components, or other various appliances); a motor such as an engine in which oil is always present and the oil is used for the purpose of lubrication, cooling, or hydraulic pressure; a speed change gear such as a transmission and a drive transmission device; a hydraulic power unit in which power is transmitted by hydraulic pressure such as a hydraulic brake; a device in which power is transmitted by a wire or the like; and a pumping device such as a compressor and a decompression pump.

The oil and heat resistant adhesive structure in which the oil and heat-resistant pressure-sensitive adhesive sheet 1 is bonded to the above-described adherend 4 can be applied to various industrial products. Examples of the oil and heat resistant adhesive structure include, to be specific, a device in which the oil and heat-resistant pressure-sensitive adhesive sheet 1 is bonded, and a fixed structure or a bundle structure in which the above-described device or components of its surrounding are fixed or bound with the oil and heat-resistant pressure-sensitive adhesive sheet 1.

Although not shown, the oil and heat-resistant pressure-sensitive adhesive sheet 1 can be used for constraints on the adherend 4.

Furthermore, even when the pressure-sensitive adhesive layer 3 in the oil-resistant pressure-sensitive adhesive sheet 1 described above is allowed to adhere to the adherend 4 disposed under a high humidity atmosphere and/or a high temperature and high humidity atmosphere, the pressure-sensitive adhesive force with respect to the adherend 4 can be retained.

To be specific, pressure-sensitive adhesive force (to be described later in Examples) after the pressure-sensitive adhesive layer 3 is stored under the high temperature and high humidity atmosphere is, for example, 14N/20 mm or more, preferably 16N/20 mm or more, and for example, 50N/20 mm or less.

The ratio (described in detail in Examples later) of the pressure-sensitive adhesive force of the pressure-sensitive adhesive layer 3 after being stored at high temperature and high humidity with respect to that of the pressure-sensitive adhesive layer 3 at normal temperature and normal humidity is, for example, 80 % or more, preferably 90 % or more, more preferably 130 % or more, or particularly preferably 150 % or more, and is, for example, 300 % or less.

Accordingly, the above-described oil-resistant pressure-sensitive adhesive sheet 1 can also serve as an oil-resistant and humidity-resistant pressure-sensitive adhesive sheet 1 and/or an oil-resistant, heat-resistant, and humidity-resistant pressure-sensitive adhesive sheet 1. The oil-resistant adhesive structure can also serve as an oil-resistant and humidity resistant adhesive structure and/or an oil-resistant, heat-resistant, and humidity-resistant adhesive structure.

Furthermore, as shown by the phantom line in FIG. 1 (b), when an opening 6 such as a joint or hole is formed in the above-described adherend 4, for example, the oil and heat-resistant pressure-sensitive adhesive sheet 1 is bonded to the adherend 4 so as to cover (block) the opening 6. In this manner, the oil and heat-resistant pressure-sensitive adhesive sheet 1 can be used as an oil and heat resistance shielding (blocking) sheet that shields the flow of oil mist passing through the opening 6.

The above-described oil and heat-resistant pressure-sensitive adhesive sheet 1 is used, other than the adherend 4 given as an example described above, fixing or binding of an adherend 4 disposed under a high temperature environment where oil is present.

FIG. 2 is a cross-sectional view illustrating another embodiment of the bonding method of the present invention, in which another embodiment (embodiment in which the pressure-sensitive adhesive layer is laminated on one surface and the other surface of the substrate) of the oil and heat resistant pressure-sensitive adhesive sheet of the present invention is bonded to the adherend. In FIG. 2, the same reference numerals are used for the members corresponding to the members shown in FIG. 1, and detailed descriptions thereof are omitted.

In the description above for FIG. 1, the pressure-sensitive adhesive layer 3 is laminated on one surface of the substrate 2; however, for example, as shown in FIG. 2, the pressure-sensitive adhesive layer 3 can be laminated on both of one surface and the other surface of the substrate 2.

In such a case, the above-described surface treatment is given to both of one surface and the other surface of the substrate 2.

Then, the oil and heat-resistant pressure-sensitive adhesive sheet 1 can be bonded (conjugated) to the two adherends 4. That is, the pressure-sensitive adhesive layer 3 on one side is bonded to an adherend 4, and the pressure-sensitive adhesive layer 3 on the other side is bonded to an adherend 4.

To bond the oil and heat-resistant pressure-sensitive adhesive sheet 1 to two adherends 4, for example, the pressure-sensitive adhesive layer 3 on one side is bonded to one adherend 4, and then the pressure-sensitive adhesive layer 3 on the other side is bonded to the other adherend 4.

The oil and heat resistant pressure-sensitive adhesive sheet of the present invention can be used, for example, as an oil and heat resistant pressure-sensitive adhesive film, and an oil and heat resistant pressure-sensitive adhesive tape.

### EXAMPLES

The present invention will now be described in more detail by way of Examples and Comparative Examples.

In the following description, the units "part(s)" and "%" are based on mass, unless otherwise noted.

### Example 1

95 parts of butyl acrylate, 5 parts of acrylic acid, and 0.05 parts of 1-dodecanethiol were added to an aqueous emulsifier solution in which 1 part of ammonium polyoxyethylene alkyl sulfate ("HITENOL LA-16", manufactured by DAI-ICHI KOGYO SEIYAKU CO., LTD.) and 89 parts of water were blended to emulsify the mixture, thereby preparing a monomer emulsion.

Next, in a reaction vessel equipped with a condenser tube, a nitrogen inlet tube, a thermometer, and a stirrer, 44 parts of water and 2 parts of ammonium polyoxyethylene alkyl sulfate ("HITENOL LA-16", manufactured by DAI-ICHI KOGYO SEIYAKU CO., LTD.) were added to prepare an aqueous emulsifier solution. One-fourth mass of the above-described monomer emulsion was added to the prepared aqueous emulsifier solution; then, the atmosphere in the reaction vessel was replaced with nitrogen for 1 hour; thereafter, the temperature was increased to 60°C; and 0.1 parts of 2,2'-azobis[N-(2-carboxyethyl)-2-methylpropioneamidine] hydrate (trade name: VA-057, manufactured by Wako Pure Chemical Industries, Ltd.) was added thereto to be polymerized for 1 hour. Thereafter, the remaining three-quarters mass of the above-described monomer emulsion was added dropwise into the reaction vessel over 3 hours and aged for 3 hours, thereby producing an emulsion (the solid content concentration of 43.7 %) of an aqueous dispersion polymer (an acrylic polymer).

Thereafter, a pH was adjusted to be 8 by adding 10 % aqueous ammonia to the obtained emulsion of the aqueous dispersion polymer. Next, 0.05 parts of an epoxy cross-linking agent (TEPIC-G, an isocyanurate skeleton-containing heterocyclic epoxy resin, manufactured by NISSAN CHEMICAL INDUSTRIES, LTD.), as an external cross-linking agent, and 20 parts (10 parts by solid content) of silica particles in the form of an aqueous dispersion (an average particle size of about 40 nm, ADELITE AT-50, the solid content concentration of 50 %, manufactured by ADEKA CORPORATION) with respect to 100 parts of the aqueous dispersion polymer were added to the emulsion at room temperature, thereby producing an aqueous dispersion type oil-resistant pressure-sensitive adhesive composition.

Separately, a substrate formed from a PTFE film (NITOFLON® film No.901 W-UL, surface roughness of one surface Rz 3 µm, manufactured by Nitto Denko Corporation) was prepared: the PTFE film had one surface treated with a surface roughening treatment, and had a thickness of 100 µm.

To be specific, one surface of the substrate was treated with a surface roughening treatment as follows. That is, the PTFE film was disposed in a chamber so that the other surface of the PTFE film was protected, and then while introducing argon gas in the sealed chamber, the pressure in the chamber reduced to 3 Pa. Thereafter, a high-frequency voltage (frequency 13.56MHz) was applied to the inside chamber, and one surface of the PTFE film was subjected to sputter etching with an energy of 2J/cm².

Next, the aqueous dispersion type oil-resistant pressure-sensitive adhesive composition obtained as described above was applied to one surface of the substrate so that the thickness thereof after drying was 50 µm. The aqueous dispersion type oil-resistant pressure-sensitive adhesive composition was dried at 120°C for 3 minutes, thereby forming a pressure-sensitive adhesive layer. The oil and heat resistant pressure-sensitive adhesive tape including a substrate and a pressure-sensitive adhesive layer laminated on one surface thereof was obtained in this manner.

### Example 2

95 parts of butyl acrylate, 5 parts of acrylic acid, and 0.05 parts of 1-dodecanethiol were added to an aqueous emulsifier solution in which 1 part of ammonium polyoxyethylene alkyl sulfate ("HITENOL LA-16", manufactured by DAI-ICHI KOGYO SEIYAKU CO., LTD.) and 89 parts of water were blended to emulsify the mixture, thereby preparing a monomer emulsion.

Next, in a reaction vessel equipped with a condenser tube, a nitrogen inlet tube, a thermometer, and a stirrer, 44 parts of water and 2 parts of ammonium polyoxyethylene alkyl sulfate ("HITENOL LA-16", manufactured by DAI-ICHI KOGYO SEIYAKU CO., LTD.) were added to prepare an aqueous emulsifier solution. One-fourth mass of the above-described monomer emulsion was added to the prepared aqueous emulsifier solution; then, the atmosphere in the reaction vessel was replaced with nitrogen for 1 hour; thereafter, the temperature was increased to 60°C; and 0.1 parts of 2,2'-azobis[N-(2-carboxyethyl)-2-methylpropioneamidine] hydrate (trade name: VA-057, manufactured by Wako Pure Chemical Industries, Ltd.) was added thereto to be polymerized for 1 hour. Thereafter, the remaining three-quarters mass of the above-described monomer emulsion was added dropwise into the reaction vessel over 3 hours and aged for 3 hours, thereby producing an emulsion (the solid content concentration of 43.7 %) of an aqueous dispersion polymer (an acrylic polymer).

Thereafter, 10 % aqueous ammonia was added to the obtained emulsion of the aqueous dispersion polymer to adjust the pH to 8. Next, 0.05 parts of an epoxy cross-linking agent (TEPIC-G, an isocyanurate skeleton-containing heterocyclic epoxy resin, manufactured by NISSAN CHEMICAL INDUSTRIES, LTD.), as an external cross-linking agent, and 20 parts (10 parts by solid content) of silica particles in the form of an aqueous dispersion (an average particle size of about 40 nm, ADELITE AT-50, the solid content concentration of 50 %, manufactured by ADEKA CORPORATION) with respect to 100 parts of the aqueous dispersion polymer were added to the emulsion at room temperature, thereby producing an aqueous dispersion type oil-resistant pressure-sensitive adhesive composition.

Separately, a substrate composed of a PTFE film (NITOFLON® film No.901 UL, manufactured by Nitto Denko Corporation) was prepared: the PTFE film had one surface treated with a surface roughening treatment, and had a thickness of 100 µm.

To be specific, one surface of the substrate was treated with a surface roughening treatment as follows. That is, an etching solution (TETRA-ETCH®, manufactured by Junkosha Inc.) was applied on one side surface of the PTFE film, and allowed to stand for 5 seconds, thereby conducting wet etching. Thereafter, the substrate was washed to remove the etching solution, and then the substrate was dried.

Then, the treatment was performed in the same manner as in Example 1, except that a pressure-sensitive adhesive layer was formed on the treated surface of the substrate, thereby producing an oil and heat resistant pressure-sensitive adhesive tape including a substrate, a primer layer laminated on one surface thereof, and a pressure-sensitive adhesive layer laminated on one surface thereof.

### Comparative Example 1

A pressure-sensitive adhesive layer was formed and then an oil and heat resistant pressure-sensitive adhesive tape was produced in the same manner as in Example 1, except that a substrate composed of PTFE having one surface not treated with a surface roughening treatment and having a thickness of 100 µm was used.

### Comparative Example 2

An aqueous dispersion type heat resistant pressure-sensitive adhesive composition was produced and then a heat resistant pressure-sensitive adhesive tape was produced in the same manner as in Example 1, except that no silica particles were added.

### Comparative Example 3

An aqueous dispersion type heat resistant pressure-sensitive adhesive composition was produced and then a heat resistant pressure-sensitive adhesive tape was produced in the same manner as in Example 2, except that no silica particles were added.

### Comparative Example 4

A pressure-sensitive adhesive layer having a thickness of 50 µm was formed, and thereafter, a heat resistant pressure-sensitive adhesive tape was produced in the same manner as in Example 1, except that a solvent solution type heat resistant pressure-sensitive adhesive composition was prepared instead of the aqueous dispersion type heat resistant pressure-sensitive adhesive composition.

To prepare a solvent solution type heat resistant pressure-sensitive adhesive composition, first, in a reaction vessel equipped with a condenser tube, a nitrogen inlet tube, a thermometer, and a stirrer, 95 parts of butyl acrylate, 5 parts of acrylic acid, 150 parts of toluene, and 0.1 parts of 2,2'-azobisisobutyronitrile were put to be polymerized (to be subjected to solution polymerization) at 60°C for 8 hours, thereby producing a solvent solution type acrylic polymer solution.

Then, 2.67 parts (2 parts by the solid content) of an oil-soluble isocyanate cross-linking agent solution (CORONATE® L, the solid content concentration of 75 %, manufactured by NIPPON POLYURETHANE INDUSTRY CO., LTD.), as an external cross-linking agent, was added with respect to 100 parts of the solid content of the obtained solvent solution type acrylic polymer solution, thereby producing a solvent solution type heat resistant pressure-sensitive adhesive composition.

### Comparative Example 5

A pressure-sensitive adhesive layer having a thickness of 50 µm was formed, and thereafter, a heat resistant pressure-sensitive adhesive tape was produced in the same manner as in Example 2, except that a solvent solution type heat resistant pressure-sensitive adhesive composition was prepared instead of the aqueous dispersion type heat resistant pressure-sensitive adhesive composition.

To prepare a solvent solution type heat resistant pressure-sensitive adhesive composition, first, in a reaction vessel equipped with a condenser tube, a nitrogen inlet tube, a thermometer, and a stirrer, 95 parts of butyl acrylate, 5 parts of acrylic acid, 150 parts of toluene, and 0.1 parts of 2,2'-azobisisobutyronitrile were put to be polymerized (to be subjected to solution polymerization) at 60°C for 8 hours, thereby producing a solvent solution type acrylic polymer solution.

Then, 2.67 parts (2 parts by the solid content) of an oil-soluble isocyanate cross-linking agent solution (CORONATE® L, the solid content concentration of 75 %, manufactured by NIPPON POLYURETHANE INDUSTRY CO., LTD.), as an external cross-linking agent, was added with respect to 100 parts of the solid content of the obtained solvent solution type acrylic polymer solution, thereby producing a solvent solution type heat resistant pressure-sensitive adhesive composition.

Table 1 shows details of the pressure-sensitive adhesive layers and the substrates of Examples and Comparative Examples.

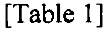

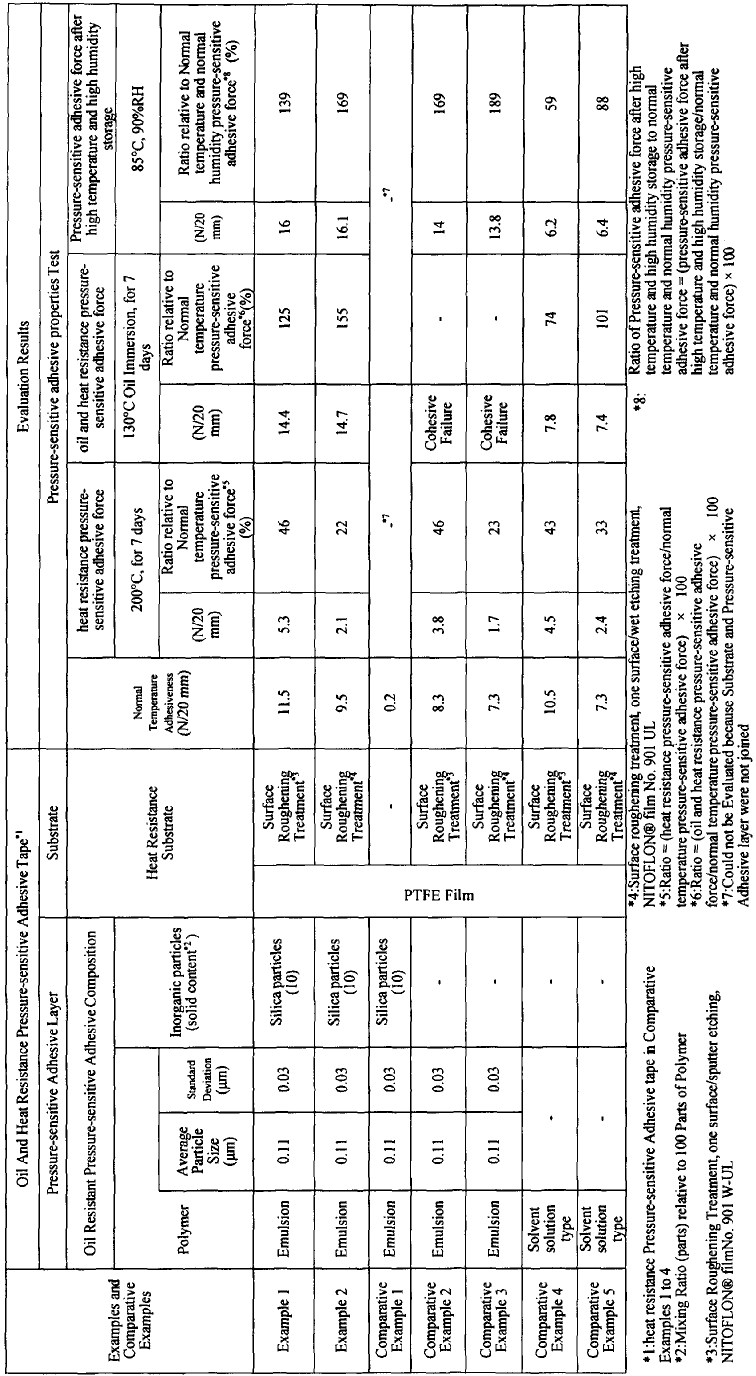

### Evaluation

### 1. Average Particle Size and Standard Deviation of Aqueous Dispersion Particles of Aqueous Dispersion Polymer

The volume-based average particle size and standard deviation of the aqueous dispersion particles of the aqueous dispersion polymer of Examples 1 and 2 and Comparative Examples 1 to 3 were measured using a laser diffraction/scattering particle size distribution analyzer (LS13 320, laser light source: laser diode and tungsten lamp, wavelength 450 to 900 nm, manufactured by Beckman Coulter, Inc.).

The results are shown in Table 1.

### (Pressure-sensitive adhesive properties Test)

### 2. Pressure-sensitive adhesive properties Test

### (1) Normal Temperature pressure-sensitive adhesive force (pressure-sensitive adhesive properties under normal temperature atmosphere)(normal temperature and normal humidity pressure-sensitive adhesive force)

The oil and heat resistant pressure-sensitive adhesive tapes of Examples and the heat resistant pressure-sensitive adhesive tapes of Comparative Examples were cut into a size of a width of 20 mm, and a length of 40 mm to prepare samples, and the sample pressure-sensitive adhesive layers were bonded to the aluminum plate surface. Then, a 2kg rubber roller is rolled over to go back and forth (one round), to pressure bond the sample to the aluminum plate, and then they are allowed to stand at 23°C for 30 min. Thereafter, a peel test (180 degree peel, peeling speed 300 mm/min) was conducted under an atmosphere of 23°C and a humidity of 30%RH, and the measured peel force was regarded as normal temperature pressure-sensitive adhesive force (normal temperature and normal humidity pressure-sensitive adhesive force). The pressure-sensitive adhesive properties under normal temperature atmosphere was evaluated in this manner.

The results are shown in Table 1.

### (2) Heat resistance pressure-sensitive adhesive force (Heat Resistance: Pressure-sensitive adhesive properties Under High Temperature Atmosphere)

The aluminum plate to which the sample was pressure bonded and allowed to stand at 23°C for 30 minutes as described above was stored under an atmosphere of 200°C for 7 days. Thereafter, the aluminum plate was taken out from the above-described atmosphere, and a peel test (180 degree peel, peeling speed 300 mm/min) was conducted under an atmosphere of 23°C. The measured peel force was regarded as heat resistance pressure-sensitive adhesive force, and pressure-sensitive adhesive properties under high temperature atmosphere (heat resistance) of the sample was evaluated in this manner. The ratio of the heat resistance pressure-sensitive adhesive force to the normal temperature pressure-sensitive adhesive force (= (heat resistance pressure-sensitive adhesive force/normal temperature pressure-sensitive adhesive force) × 100 (%)) was calculated.

In Comparative Example 1, when the sample was taken out from the above-described atmosphere, the substrate and the pressure-sensitive adhesive layer were not joined, and therefore could not be evaluated.

The results are shown in Table 1.

### (3) oil and heat resistance pressure-sensitive adhesive force (oil and heat resistance: pressure-sensitive adhesive properties under high temperature atmosphere where oil is present)

The aluminum plate to which the sample was pressure bonded and allowed to stand at 23°C for 30 minutes as described above was immersed in oil (trade name: Shell Vitrea Oil 32, manufactured by Showa Shell Sekiyu K.K.), and stored under an atmosphere of 130°C for 7 days. Thereafter, the aluminum plate was taken out from the oil, and a peel test (180 degree peel, peeling speed 300 mm/min) was conducted under an atmosphere of 23°C. The measured peel force was regarded as oil and heat resistance pressure-sensitive adhesive force, and the sample was evaluated in this manner for pressure-sensitive adhesive properties under high temperature atmosphere where oil is present (oil and heat resistance). The ratio of the oil and heat resistance pressure-sensitive adhesive force to the normal temperature adhesiveness (= (oil and heat resistance pressure-sensitive adhesive force/normal temperature pressure-sensitive adhesive force) × 100 (%)) was calculated.

In Comparative Example 1, when the sample was taken out from the above-described atmosphere, the substrate and the pressure-sensitive adhesive layer was not joined, and therefore could not be evaluated.

The results are shown in Table 1.

As is clear from Table 1, normal temperature pressure-sensitive adhesive force of oil resistant pressure-sensitive adhesive tapes of Comparative Examples 1 and 2 in which the pressure-sensitive adhesive layer does not contain silica particles is inferior to that of Examples 1 and 2, in which the pressure-sensitive adhesive layer contains silica particles. In evaluation for oil and heat resistance, cohesive failure occurred and the pressure-sensitive adhesive layer deteriorated due to high temperature oil.

Normal temperature pressure-sensitive adhesive force of oil resistant pressure-sensitive adhesive tape of Comparative Examples 4 and 5 in which the pressure-sensitive adhesive layer does not contain silica particles and formed from solvent solution type polymer is inferior to that of Examples 1 and 2, in which the pressure-sensitive adhesive layer contains silica particles and formed from aqueous dispersion polymer. Oil and heat resistant pressure-sensitive adhesive force of Comparative Example 4 was lower than normal temperature pressure-sensitive adhesive force, and oil and heat resistance was insufficient. Compared with Example 2, in the oil resistant pressure-sensitive adhesive tape of Comparative Example 5, the ratio of oil and heat resistant pressure-sensitive adhesive force to normal temperature pressure-sensitive adhesive force was small, and oil and heat resistance was insufficient.

On the other hand, the oil and heat resistant pressure-sensitive adhesive tape of Examples 1 and 2 including a substrate formed from a PTFE film and an pressure-sensitive adhesive layer laminated on one surface thereof and formed from an aqueous dispersion type pressure sensitive adhesive composition containing silica particles and an aqueous dispersion polymer had superior normal temperature pressure-sensitive adhesive force and also decrease in both heat resistance and oil and heat resistance was effectively prevented.

In Examples 1 and 2, in which one surface of the PTFE film is given a surface treatment (Example 1: surface roughening treatment by sputter etching, Example 2: surface roughening treatment by wet etching), compared with Comparative Example 1, in which the PTFE film was not given a surface treatment, close adhesion between substrate and the pressure-sensitive adhesive layer was improved.

### (4) pressure-sensitive adhesive force after Being Stored at High Temperature and High Humidity

The oil resistant pressure-sensitive adhesive sheets of Examples 1 and 2, and the pressure-sensitive adhesive sheet of Comparative Examples 2 to 5 were cut into a size having a width of 20 mm, and a length of 40 mm to prepare samples, and the sample pressure-sensitive adhesive layer was bonded to the surface of aluminum plate. Then, a 2kg rubber roller was rolled over back and forth (one round), thereby pressure-bonding the sample to the aluminum plate.

Thereafter, the samples were put into a high temperature and high humidity chamber of 85°C/90%RH, and after 1000 hours, the samples were taken out.

Thereafter, a peel test (180 degree peel, peeling speed 300 mm/min) was conducted for the samples that were taken out under an atmosphere of 23°C, and the measured peel force was regarded as pressure-sensitive adhesive force after high temperature and high humidity storage.

The ratio of the pressure-sensitive adhesive force after high temperature and high humidity storage to the normal temperature and normal humidity pressure-sensitive adhesive force (pressure-sensitive adhesive force after high temperature and high humidity storage/normal temperature and normal humidity pressure-sensitive adhesive force) was calculated by percentage.

The results are shown in Table 1.

In Comparative Example 1, even though the sample was pressure bonded to the aluminum plate, these were not sufficiently adhered to each other, and therefore the pressure-sensitive adhesive force after high temperature and high humidity storage and the ratio could not be measured.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

The oil and heat resistant pressure-sensitive adhesive sheet is bonded to an adherend disposed under a high temperature environment where oil is present and used.

## Claims

1. An oil and heat resistant pressure-sensitive adhesive sheet comprising:
a substrate containing a fluororesin, and
a pressure-sensitive adhesive layer laminated on at least one surface of the substrate,
wherein the one surface of the substrate is subjected to a surface roughening treatment and/or a primer treatment,
the pressure-sensitive adhesive layer is formed from an aqueous dispersion type oil-resistant pressure-sensitive adhesive composition containing an aqueous dispersion polymer and inorganic particles,
the average particle size of each of the inorganic particles is 1 to 1000 nm measured according to the method described herein, and
the aqueous dispersion polymer is an acrylic polymer.

2. The oil and heat resistant pressure-sensitive adhesive sheet according to claim 1, wherein the substrate is formed from a film comprising polytetrafluoroethylene.

3. The oil and heat resistant pressure-sensitive adhesive sheet according to claim 1, wherein at least said one surface of the substrate is subjected to sputter etching and/or wet etching.

4. The oil and heat resistant pressure-sensitive adhesive sheet according to claim 1, wherein the aqueous dispersion polymer has a standard deviation of the volume-based average particle size of 0.001 µm or more and 0.2 µm or less as measured according to the method described herein.

5. A bonding method in which an oil and heat resistant pressure-sensitive adhesive sheet is bonded to an adherend disposed under an environment where oil is present,
the oil and heat resistant pressure-sensitive adhesive sheet comprising:
a substrate containing a fluororesin, and
a pressure-sensitive adhesive layer laminated on at least one surface of the substrate,
wherein the one surface of the substrate is subjected to a surface roughening treatment and/or a primer treatment,
the pressure-sensitive adhesive layer comprises an aqueous dispersion type oil-resistant pressure-sensitive adhesive composition containing an aqueous dispersion polymer and inorganic particles,
the average particle size of each of the inorganic particles is 1 to 1000 nm, and
the aqueous dispersion polymer is an acrylic polymer.

6. An oil and heat resistant adhesive structure in which an oil and heat resistant pressure-sensitive adhesive sheet is bonded to an adherend disposed under an environment where oil is present,
the oil and heat resistant pressure-sensitive adhesive sheet comprising:
a substrate containing a fluororesin, and
a pressure-sensitive adhesive layer laminated on at least one surface of the substrate,
wherein the one surface of the substrate is subjected to a surface roughening treatment and/or a primer treatment,
the pressure-sensitive adhesive layer comprises an aqueous dispersion type oil-resistant pressure-sensitive adhesive composition containing an aqueous dispersion polymer and inorganic particles,
the average particle size of each of the inorganic particles is 1 to 1000 nm, and
the aqueous dispersion polymer is an acrylic polymer.

## Patentansprüche

1. Öl- und wärmebeständige druckempfindliche Klebefolie, umfassend:
ein Substrat, das ein Fluorharz enthält, und
eine druckempfindliche Klebeschicht, die auf wenigstens eine Oberfläche des Substrats laminiert ist,
wobei die eine Oberfläche des Substrats einer Oberflächenaufrauungsbehandlung und/oder einer Primerbehandlung unterworfen ist,
die druckempfindliche Klebeschicht aus einer ölbeständigen druckempfindlichen Klebstoffzusammensetzung vom wässrigen Dispersionstyp gebildet ist, enthaltend ein wässriges Dispersionspolymer und anorganische Partikel,
die durchschnittliche Partikelgröße jedes der anorganischen Partikel 1 bis 1000 nm beträgt, gemessen nach dem hier beschriebenen Verfahren, und
das wässrige Dispersionspolymer ein Acrylpolymer ist.

2. Öl- und wärmebeständige druckempfindliche Klebefolie nach Anspruch 1, wobei das Substrat aus einem Film gebildet ist, das Polytetrafluorethylen umfasst.

3. Öl- und wärmebeständige druckempfindliche Klebefolie nach Anspruch 1, wobei die mindestens eine Oberfläche des Substrats einer Sputterätzung und/oder Nassätzung unterworfen ist.

4. Öl- und wärmebeständige druckempfindliche Klebefolie nach Anspruch 1, wobei das wässrige Dispersionspolymer eine Standardabweichung der volumenbasierten durchschnittlichen Partikelgröße von 0,001 µm oder mehr und 0,2 µm oder weniger aufweist, gemessen nach dem hier beschriebenen Verfahren.

5. Verbindungsverfahren, wobei eine öl- und wärmebeständige druckempfindliche Klebefolie an eine Klebefläche gebunden wird, die in einer Umgebung angeordnet ist, in der Öl vorhanden ist,
wobei die öl- und wärmebeständige druckempfindliche Klebefolie, umfasst:
ein Substrat, das ein Fluorharz enthält, und
eine druckempfindliche Klebeschicht, die auf wenigstens eine Oberfläche des Substrats laminiert ist,
wobei die eine Oberfläche des Substrats einer Oberflächenaufrauungsbehandlung und/oder einer Primerbehandlung unterworfen ist,
die druckempfindliche Klebeschicht eine ölbeständige druckempfindliche Klebstoffzusammensetzung vom wässrigen Dispersionstyp umfasst, enthaltend ein wässriges Dispersionspolymer und anorganische Partikel,
die durchschnittliche Partikelgröße jedes der anorganischen Partikel 1 bis 1000 nm beträgt, und
das wässrige Dispersionspolymer ein Acrylpolymer ist.

6. Öl- und wärmebeständige Klebstoffstruktur, wobei eine öl- und wärmebeständige druckempfindliche Klebefolie an eine Klebefläche gebunden ist, die in einer Umgebung angeordnet ist, in der Öl vorhanden ist,
wobei die öl- und wärmebeständige druckempfindliche Klebefolie, umfasst:
ein Substrat, das ein Fluorharz enthält, und
eine druckempfindliche Klebeschicht, die auf wenigstens eine Oberfläche des Substrats laminiert ist,
wobei die eine Oberfläche des Substrats einer Oberflächenaufrauungsbehandlung und/oder einer Primerbehandlung unterworfen ist,
die druckempfindliche Klebeschicht eine ölbeständige druckempfindliche Klebstoffzusammensetzung vom wässrigen Dispersionstyp umfasst, enthaltend ein wässriges Dispersionspolymer und anorganische Partikel,
die durchschnittliche Partikelgröße jedes der anorganischen Partikel 1 bis 1000 nm beträgt, und
das wässrige Dispersionspolymer ein Acrylpolymer ist.

## Revendications

1. Feuille adhésive sensible à la pression résistant à l'huile et à la chaleur comprenant :
un substrat contenant une résine fluorée et
une couche d'adhésif sensible à la pression stratifiée sur au moins une surface du substrat,
dans laquelle la surface du substrat concernée est soumise à un traitement de rugosification de surface et/ou un traitement par primaire,
la couche d'adhésif sensible à la pression est formée à partir d'une dispersion aqueuse de type composition d'adhésif sensible à la pression résistant à l'huile contenant un polymère en dispersion aqueuse et des particules inorganiques,
la taille de particule moyenne de chacune des particules inorganiques va de 1 à 1000 nm mesurée selon la méthode décrite dans l'invention et le polymère en dispersion aqueuse est un polymère acrylique.

2. Feuille adhésive sensible à la pression résistant à l'huile et à la chaleur selon la revendication 1, dans laquelle le substrat est formé d'un film comprenant du polytétrafluoroéthylène.

3. Feuille adhésive sensible à la pression résistant à l'huile et à la chaleur selon la revendication 1, dans laquelle ladite surface du substrat concernée au moins est soumise à une gravure par projection et/ou une gravure par voie humide.

4. Feuille adhésive sensible à la pression résistant à l'huile et à la chaleur selon la revendication 1, dans laquelle le polymère en dispersion aqueuse a un écart-type de taille de particule moyenne basée sur le volume de 0,001 µm ou plus et 0,2 µm ou moins ainsi que mesuré selon la méthode décrite dans l'invention.

5. Procédé de liaison dans lequel une feuille adhésive sensible à la pression résistant à l'huile et à la chaleur est liée à un support disposé dans un environnement dans lequel de l'huile est présente,
la feuille adhésive sensible à la pression résistant à l'huile et à la chaleur comprenant :
un substrat contenant une résine fluorée et
une couche d'adhésif sensible à la pression stratifiée sur au moins une surface du substrat,
dans laquelle la surface du substrat concernée est soumise à un traitement de rugosification de surface et/ou un traitement par primaire,
la couche d'adhésif sensible à la pression est formée à partir d'une dispersion aqueuse de type composition d'adhésif sensible à la pression résistant à l'huile contenant un polymère en dispersion aqueuse et des particules inorganiques,
la taille de particule moyenne de chacune des particules inorganiques va de 1 à 1000 nm et
le polymère en dispersion aqueuse est un polymère acrylique.

6. Structure adhésive résistant à l'huile et à la chaleur dans laquelle une feuille adhésive sensible à la pression résistant à l'huile et à la chaleur est liée à un support disposé dans un environnement dans lequel de l'huile est présente,
la feuille adhésive sensible à la pression résistant à l'huile et à la chaleur comprenant :
un substrat contenant une résine fluorée et
une couche d'adhésif sensible à la pression stratifiée sur au moins une surface du substrat,
dans laquelle la surface du substrat concernée est soumise à un traitement de rugosification de surface et/ou un traitement par primaire,
la couche d'adhésif sensible à la pression est formée à partir d'une dispersion aqueuse de type composition d'adhésif sensible à la pression résistant à l'huile contenant un polymère en dispersion aqueuse et des particules inorganiques,
la taille de particule moyenne de chacune des particules inorganiques va de 1 à 1000 nm et
le polymère en dispersion aqueuse est un polymère acrylique.
